# FASCICULE DE BREVET EUROPEEN

(11) **EP 0 752 336 B1**
(45) Date de publication et mention de la délivrance du brevet: **15.03.2000**
(21) Numéro de dépôt: 96401477.3
(22) Date de dépôt: 04.07.1996
(51) Int. Cl.: B60J 5/04

(54) **Ouvrant pour véhicule automobile**
Schwenkflügel für Kraftfahrzeug
Opening wing for a motor vehicle

(30) Priorité: 04.07.1995 FR 9508041
(43) Date de publication de la demande: 08.01.1997
(73) Titulaire: PEGUFORM FRANCE, 01100 Oyonnax (FR)
(72) Inventeur: Sauvaget, Olivier, 01100 Oyonnax (FR); Guichon, Alain, 01100 Oyonnax (FR)
(74) Mandataire: Martin, Jean-Jacques

(56) Documents cités:
- EP-A- 0 630 775
- WO-A-81/03467
- WO-A-90/09902
- DE-A- 3 608 506
- GB-A- 2 271 534

## Description

La présente invention concerne un ouvrant pour véhicule automobile, comprenant une peau externe essentiellement destinée à apporter le style extérieur de l'ouvrant, et un panneau interne qui comporte la majorité des fonctions de l'ouvrant.

Dans les ouvrants de ce type actuellement déjà connus, la structure mécanique de l'ouvrant est donnée par une doublure réalisée en tôle et placée entre la peau externe et le panneau interne dudit ouvrant.

La peau externe et la doublure de structure sont assemblées de façon indissociable par sertissage et collage de façon à conférer la rigidité suffisante à la tenue mécanique de l'ouvrant.

Toutefois, de tels ouvrants déjà connus présentent un certain nombre d'inconvénients.

Tout d'abord, l'assemblage des trois couches successives constituées par la peau externe, la doublure de structure et le panneau interne impose une étape de montage relativement complexe.

En effet, il faut d'abord assembler la peau et la doublure de structure avant de monter le panneau interne.

Par ailleurs, le fait que la tenue mécanique de l'ouvrant est donnée par l'assemblage indissociable de la peau externe et de la doublure de structure en tôle, rend impossible le traitement du style indépendamment de la tenue mécanique, ce qui impose des contraintes au niveau du style.

Lorsque la peau externe est assemblée par sertissage et collage avec la doublure de la tôle, il n'est plus possible de démonter facilement l'ensemble pour avoir accès à toutes les fonctions de l'ouvrant.

Enfin, pour que cet ouvrant résiste aux chocs latéraux ou frontaux, il comporte un système d'absorption complexe constitué par des barres de renfort métalliques qui alourdissent la structure et posent des problèmes de désincarcération en cas de choc frontal.

De ce fait, en plus des barres de renfort, il est souvent nécessaire d'ajouter des air-bags latéraux ou des sytèmes à structure alvéolaire, ce qui rend le système d'absorption lourd, complexe et coûteux.

En outre, on connaît du document WO - A-90/09 902 un ouvrant pour véhicule automobile qui comprend d'une part un élément de structure interne constitué par une pièce métallique se présentant sour la forme d'anneau de section en U et une pièce plastique munie de nervures de rigidification, et d'autre part un panneau extérieur rapporté sur cet élément de structure interne.

La pièce métallique de l'élément de structure interne est disposée du côté intérieur de l'ouvrant et la pièce plastique est surmoulée sur la pièce métallique du côté extérieur dudit ouvrant. Du côté intérieur dudit ouvrant, il est prévu une garniture intérieure réalisée en matériau thermoplastique qui recouvre la pièce métallique de l'élément de structure interne et intégre des fonctions telles que vide-poche, poignée de porte ou encore cache support rétroviseur.

Un tel ouvrant est relativement complexe et nécessite de nombreuses étapes de montage ce qui implique un coût de fabrication élévé.

En effet, il faut d'abord réaliser l'élément de structure interne en surmoulant la pièce plastique munie des nervures de rigidification sur la pièce métallique. Puis, il faut souder la garniture intérieure sur la pièce plastique en portant une attention particulière à la compatibilité en soudure des deux pièces thermoplastiques afin d'obtenir un ensemble homogène en structure et étanchéité. Enfin, dans les dernières étapes, il faut fixer le panneau extérieur conférant le style de l'ouvrant et l'encadrement de vitre sur ledit assemblage réalisé.

Afin de pallier les inconvénients précités, la présente invention propose un nouvel ouvrant pour véhicule automobile, dans lequel la peau externe est directement montée sur le panneau interne, le panneau interne étant réalisé en matière plastique de telle sorte qu'il est auto-portant pour constituer l'élément structurel de l'ouvrant en lui apportant la rigidité suffisante à sa tenue mécanique.

Ainsi, selon l'invention le panneau interne réalisé principalement en matière plastique devient la pièce essentielle de l'ouvrant puisque la doublure en tôle de structure ou la pièce métallique en forme d'anneau de section en U n'existe plus.

En effet, la pièce en matière plastique auto-portante constituant le panneau interne selon l'invention, est réalisée de sorte qu'elle présente la rigidité suffisante à la tenue mécanique dudit ouvrant. Il n'est donc pas nécessaire d'utiliser une pièce métallique supplémentaire.

Selon l'invention, ce panneau interne intégre la majorité des fonctions de l'ouvrant et notamment comporte des logements pour des organes mécaniques fonctionnels, tels que serrure, poignées, charnières, cassette de léve-vitre.

Selon un mode de réalisation de l'invention, on peut prévoir dans ledit panneau interne des glissières verticales latérales pour le montage à coulissement d'une vitre, lorsque l'ouvrant constitue une portière de véhicule.

Avantageusement, le panneau interne de l'ouvrant selon l'invention, est réalisé de sorte qu'il assure à lui seul l'absorption de l'énergie aussi bien d'un choc latéral que d'un choc frontal.

En ce qui concerne l'étanchéité des ouvrants de type connu, elle est réalisée par un joint périphérique positionné entre les bords du panneau interne et celui de l'assemblage de la peau externe avec la doublure de structure, et par des joints au droit des fonctions.

Dans l'ouvrant conforme à la présente invention, il n'y a plus qu'une seule pièce essentielle constituée par le panneau interne qui intégre la tenue mécanique de l'ouvrant et les différentes fonctions dudit ouvrant, et de ce fait, il n'est plus nécessaire de prévoir un joint périphérique conférant l'étanchéité entre l'extérieur et l'intérieur de l'ouvrant mais l'étanchéité sera traitée uniquement au droit des différentes fonctions communiquant entre l'intérieur et l'extérieur du véhicule.

Selon une caractéristique de l'ouvrant conforme à l'invention, le panneau interne peut être réalisé par soufflage.

Selon une autre caractéristique de l'ouvrant conforme à l'invention, le panneau interne est réalisé sous forme d'une structure en nid d'abeilles.

Selon une autre caractéristique, l'ouvrant conforme à la présente invention, est réalisé par injection sur la base d'un complexe mousse.

Lorsque l'ouvrant selon l'invention constitue une portière de véhicule automobile, il peut être prévu avantageusement un cadre métallique externe qui forme l'encadrement de la vitre.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente une vue éclatée en perspective d'un mode de réalisation de l'ouvrant conforme à l'invention, qui constitue ici une portière de véhicule automobile,
- la figure 2 est une vue du côté extérieur de la peau externe de l'ouvrant représenté sur la figure 1,
- la figure 3 est une vue du côté extérieur du panneau interne dans lequel est glissée la vitre, de l'ouvrant représenté sur la figure 1.

Sur les figures, on a représenté un ouvrant 100 pour véhicule automobile, qui constitue ici une portière, comportant une peau externe 110 réalisée en matériau plastique et peinte pour conférer à l'ouvrant son style extérieur.

Une telle peau externe peut également être réalisée en tôle.

Elle comporte un logement 111 pour le montage d'un rétroviseur 112, ainsi qu'un évidement 113 pour le montage d'une poignée d'ouverture.

Cette peau externe 110, comporte des retours latéraux 114 qui s'étendent essentiellement perpendiculairement à ladite peau et qui comporte des trous 115 pour le passage d'éléments de fixation.

Un desdits retours 114 est pourvu d'une encoche pour le montage du verrou, l'autre retour 114 étant pourvu d'une encoche pour le montage de charnières.

En outre, l'ouvrant représenté sur les figures comporte une pièce de structure constituée par un panneau interne 120, réalisé en matière plastique, par exemple en polypropylène, de sorte qu'il est auto-portant et apporte à l'ouvrant la rigidité suffisante pour sa tenue mécanique.

Ce panneau interne 120 qui constitue l'élément essentiel de l'ouvrant, intégre la majorité des fonctions de celui-ci.

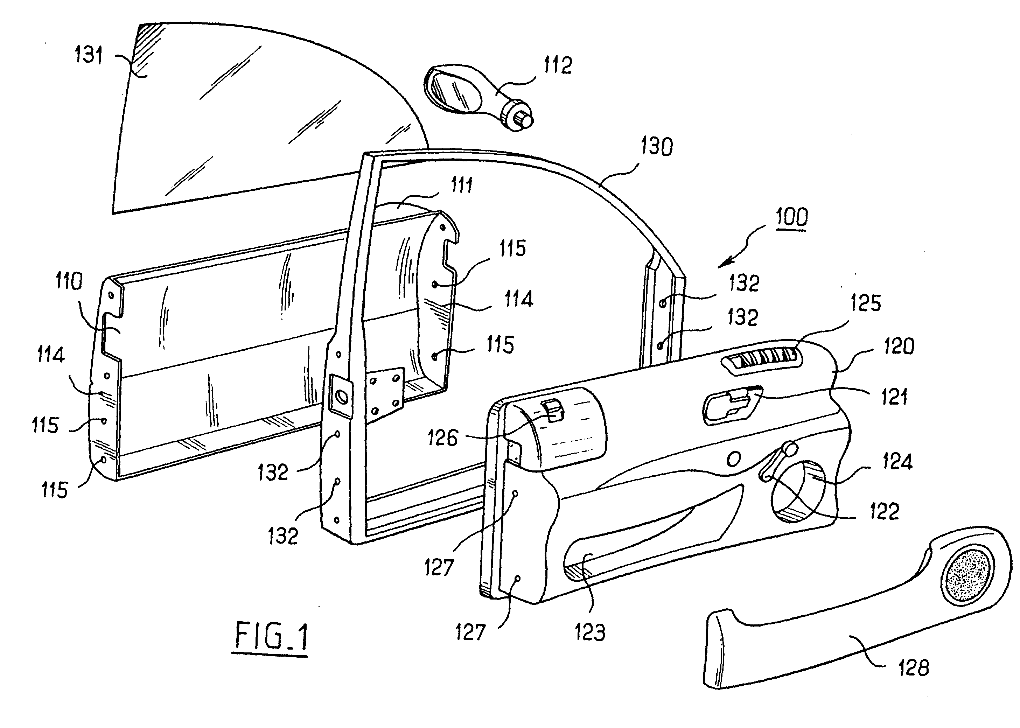

Comme on peut le voir sur la figure 1, il comporte des logements, pour la serrure et loquet de fermeture 126, la poignée d'ouverture 121, la poignée de lève-vitre 122, un évidement pour le vide-poches 123 et un logement de réception 124 d'un haut-parleur.

En outre, le panneau interne comporte du côté externe un logement pour la cassette de lève-vitre 129.

Il est prévu dans les montants latéraux du panneau interne 120 des trous de passage 127 pour des éléments de fixation en vue de l'assemblage avec la peau externe 110.

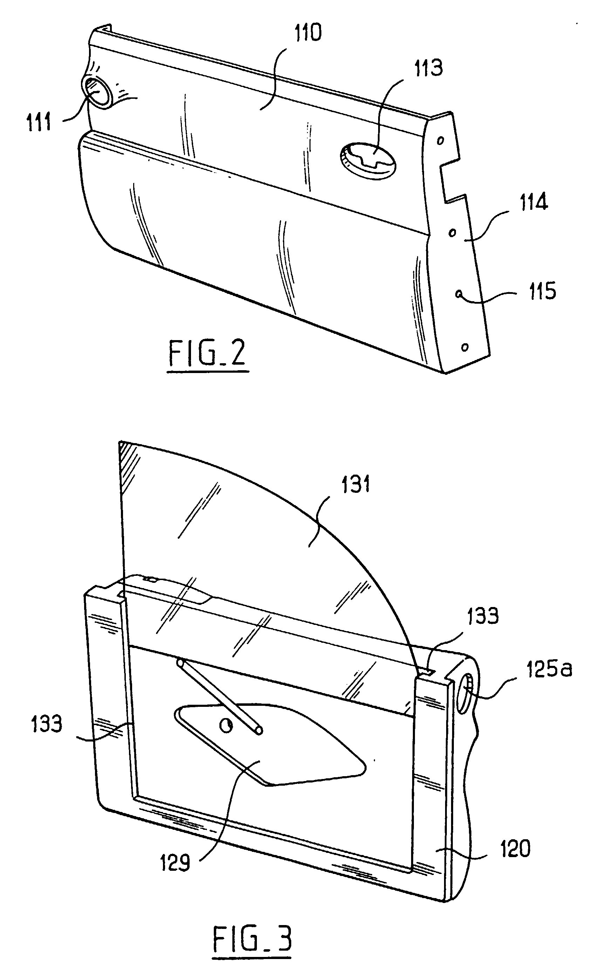

Du côté externe comme représenté plus particulièrement sur la figure 3, le panneau interne 120 comporte des glissières latérales verticales 133 pour le montage à coulissement d'une vitre 131.

Dans le cas où un tel ouvrant constitue une portière de véhicule automobile, il est avantageux de prévoir un cadre externe métallique 130 qui forme l'encadrement de la vitre 131.

Ce cadre externe 130 comporte sur les côtés latéraux des trous d'assemblage 132 qui viennent en concordance avec les trous d'assemblage 115 de la peau externe 110 et les trous d'assemblage 127 du panneau interne 120, pour le montage des deux éléments à l'aide d'éléments de fixation tels que des sytèmes vis-écrou démontables.

Selon l'invention, l'ensemble des logements pour les éléments mécaniques fonctionnels de l'ouvrant, ainsi que les glissières de montage de la vitre sont formés dans le panneau interne lors de la réalisation même dudit panneau interne.

En outre, il est avantageux de prévoir lorsque celui-ci constitue une portière de véhicule automobile, que le panneau interne comporte sur sa face externe un renfoncement pour la mise en place et le support du câble de commande de l'ouverture de la portière.

Ainsi, ce câble de commande est logé derrière la vitre qui est montée à coulissement dans les glissières verticales et est pratiquement inaccessible depuis l'extérieur.

Ceci est un avantage considérable par rapport aux ouvrants de type connu, où le câble de commande est logé directement derrière la peau externe devant la vitre et est accessible facilement depuis l'extérieur.

On remarquera également sur la figure 1, qu'un élément 128 peut être apporté sur la partie interne du panneau interne 120 de façon à cacher le haut-parleur placé dans le logement 124 et à former une paroi du vide-poches 123.

Bien entendu, selon une variante non représentée, on peut envisager de découpler la fonction cache haut-parleur de la fonction paroi de vide-poches.

Le panneau interne 120 peut être réalisé par soufflage, ou sous forme de structure en nid d'abeilles, ou encore par injection sur un complexe mousse.

Lorsque celui-ci est réalisé par soufflage, il est possible de réaliser aisément un logement 125a d'une gaine de distribution d'air vers une grille de désembuage 125.

L'ouvrant selon l'invention représentée sur les figures 1 à 3 présente les avantages suivants.

Tout d'abord, le fait que le panneau interne 120 constitue la pièce essentielle structurelle de l'ouvrant, et que la peau externe 110 n'est là que pour donner le style extérieur dudit ouvrant, il est possible de découpler complétement le critère de style de la tenue mécanique dudit ouvrant.

On peut alors envisager des panneaux internes standardisés fonctionnant pour plusieurs carrosseries différentes de véhicules automobiles.

En outre, le panneau interne selon l'invention est conçu de telle sorte qu'il assure l'absorption de l'énergie d'un choc latéral ou bien d'un choc frontal.

On obtient alors une amélioration de la tenue aux chocs dudit ouvrant par rapport au système de barres de renfort métalliques auquel il est souvent nécessaire d'ajouter des air-bags latéraux pour obtenir une absorption aux chocs suffisante qui réponde aux normes actuelles.

En ce qui concerne l'étanchéité, le fait qu'il n'existe plus trois couches dans ledit ouvrant mais un seul panneau interne revêtu du côté externe d'une peau donnant l'aspect dudit ouvrant, il n'est plus nécessaire de prévoir un joint périphérique pour assurer l'étanchéité entre l'intérieur et l'extérieur de l'ouvrant, mais une garniture d'étanchéité est prévue uniquement au droit des fonctions, plus particulièrement au droit des logements pour éléments mécaniques fonctionnels, qui communiquent entre l'intérieur et l'exterieur dudit ouvrant.

Le traitement de l'étanchéité uniquement au droit des fonctions peut être réalisé de manière indépendante et simple.

L'équipement du panneau interne selon l'invention tel que par exemple, le montage des charnières, du verrou et du câble de fermeture, est alors aisé car il est réalisé sur une seule face, la face externe.

De plus, l'assemblage de la peau externe sur le panneau interne équipé est relativement simple car cela consiste en un simple coiffage.

Le démontage de la peau externe permet l'accès à toutes les servitudes dudit ouvrant. A cet effet, la peau externe sera assemblée avec le panneau interne à l'aide de moyens de fixation démontables qui seront seulement accessibles lorsque l'ouvrant sera en position ouverte pour garantir l'inviolabilité dudit ouvrant.

En ce qui concerne plus particulièrement l'inviolabilité dudit ouvrant, comme nous l'avons déjà dit, le fait que le panneau interne selon l'invention comprenne un renfoncement externe permettant le logement du câble d'ouverture dudit ouvrant en le logeant derrière la vitre renforce l'inviolabilité de celui-ci.

En outre, le traitement dans le cas d'une portière de véhicule de l'ensemble serrure, poignée, commande intérieure et loquet de visualisation de condamnation par un module noyé dans le panneau interne renforce également le caractére inviolable de l'ouvrant.

La présente invention n'est nullement restreinte au mode de réalisation décrit et représenté, mais l'homme du métier saura y apporter toute variante conforme à son esprit, tant que l'invention demeure telle que définie par les revendications.

## Revendications

1. Ouvrant (100) pour un véhicule automobile, comprenant une peau externe (110) essentiellement destinée à conférer le style extérieur de l'ouvrant (100) et un panneau interne (120) qui incorpore la majorité des fonctions de l'ouvrant (100), caractérisé en ce que la peau externe (110) recouvre directement le panneau interne (120) et en ce que ledit panneau interne (120) est réalisé principalement en matière plastique de telle sorte qu'il est auto-portant pour constituer l'élément structurel de l'ouvrant en lui apportant une rigidité suffisante à sa tenue mécanique.

2. Ouvrant (100) selon la revendication 1, caractérisé en ce qu'il comporte une garniture d'étanchéité vis-à-vis de l'extérieur, placée uniquement au droit des fonctions prévues dans le panneau interne (120).

3. Ouvrant (100) selon l'une des revendications 1 ou 2, caractérisé en ce que le panneau interne (120) comporte des logements pour des organes mécaniques fonctionnels tels que serrure (126), poignées (121, 122), charnières (127), cassette de lève-vitre (129).

4. Ouvrant (100) selon l'une quelconque des revendications 1 à 3, caractérisé en ce que le panneau interne (120) comporte du côté externe un renfoncement pour le montage du câble d'ouverture dudit ouvrant (100).

5. Ouvrant selon l'une des revendications 1 à 4, caractérisé en ce que le panneau interne (120) comprend des glissières latérales verticales (133) pour le montage à coulissement d'une vitre (131).

6. Ouvrant selon l'une des revendications 1 à 5, caractérisé en ce que le panneau interne (120) est réalisé par soufflage.

7. Ouvrant selon la revendication 6, caractérisé en ce que le panneau interne (120) comprend un logement (125a) d'une gaine de distribution d'air vers une grille de désembuage (125).

8. Ouvrant selon l'une quelconque des revendications 1 à 5, caractérisé en ce que le panneau interne (120) est réalisé sous forme de structure en nid d'abeilles.

9. Ouvrant selon l'une quelconque des revendications 1 à 5, caractérisé en ce que le panneau interne (120) est réalisé par injection sur la base d'un complexe mousse.

10. Ouvrant selon l'une quelconque des revendications 1 à 9, caractérisé en ce qu'il comporte un cadre externe (130) à l'intérieur duquel sont assemblés la peau externe (110) et le panneau interne (120), ce cadre externe (130) qui forme l'encadrement d'une vitre (131).

## Patentansprüche

1. Türflügel (100) für ein Kraftfahrzeug, der eine Außenhülle (110) aufweist, die im wesentlichen dazu bestimmt ist, das äußere Erscheinungsbild des Türflügels (100) zu erzeugen und ein Innenwandteil (120), welches die Mehrheit der Funktionen des Türflügels (100) aufnimmt, dadurch gekennzeichnet, daß die Außenhülle (110) das Innenwandteil (120) direkt überdeckt und dadurch, daß das Innenwandteil (120) hauptsächlich aus Kunststoff besteht, derart, daß es selbsttragend ist, um das Strukturelement des Türflügels zu bilden, indem es ihm eine für seine mechanische Widerstandsfähigkeit ausreichende Steifigkeit gibt.

2. Türflügel (100) nach Anspruch 1, dadurch gekennzeichnet, daß er eine Abdichtung nach außen aufweist, die allein am Ort der in dem Innenwandteil (120) vorgesehenen Funktionen angeordnet ist.

3. Türflügel (100) nach Anspruch 1 oder 2, dadurch gekennzeichnet, daß das Innenwandteil (120) Aufnahmen für mechanische Funktionseinrichtungen aufweist, wie zum Beispiel Verschlußvorrichtung (126), Griffe (121, 122), Scharniere (127), Fensterheberkasten (129).

4. Türflügel (100) nach einem der Ansprüche 1 bis 3, dadurch gekennzeichnet, daß das Innenwandteil (120) an der Außenseite eine Verstärkung zur Montage des Öffnungskabels des Türflügels (100) aufweist.

5. Türflügel nach einem der Ansprüche 1 bis 4, dadurch gekennzeichnet, daß das Innenwandteil (120) vertikale Seitenschienen (133) zur verschiebbaren Montage einer Fensterscheibe (131) aufweist.

6. Türflügel nach einem der Ansprüche 1 bis 5, dadurch gekennzeichnet, daß das Innenwandteil (120) durch ein Formverfahren hergestellt ist.

7. Türflügel nach Anspruch 6, dadurch gekennzeichnet, daß das Innenwandteil (120) eine Aufnahme (125a) eines zu einem Antibeschlaggitter führenden Luftverteilungskanals aufweist.

8. Türflügel nach einem der Ansprüche 1 bis 5, dadurch gekennzeichnet, daß das Innenwandteil (120) in der Bauform von Bienenwaben hergestellt ist.

9. Türflügel nach einem der Ansprüche 1 bis 5, dadurch gekennzeichnet, daß das Innenwandteil (120) durch Spritzen auf der Basis eines Verbundschaumstoffes hergestellt ist.

10. Türflügel nach einem der Ansprüche 1 bis 9, dadurch gekennzeichnet, daß er einen äußeren Rahmen (130) aufweist, in dessen Innenbereich die Außenhülle (110) und das Innenwandteil (120) montiert sind, und es dieser Außenrahmen (130) ist, der die Umrahmung einer Fensterscheibe (131) bildet.

## Claims

1. An opening member (100) for a motor vehicle, the member comprising an outer skin (110) essentially designed to confer the outside style to the opening member (100) and an inner panel (120) which incorporates the majority of the functions of the opening member (100), the member being characterized in that the outer skin (110) directly covers the inner panel (120), and in that said inner panel (120) is made mainly of plastics material so that it is self-supporting so as to constitute the structural element of the opening member by providing it with sufficient rigidity for its mechanical strength.

2. An opening member (100) according to claim 1, characterized in that it includes a lining for leakproofing relative to the outside and placed solely in register with functions provided in the inner panel (120).

3. An opening member (100) according to claim 1 or 2, characterized in that the inner panel (120) includes housings for functional mechanical items such as a lock (126), handles (121, 122), hinges (127), and a window-raising cassette (129).

4. An opening member (100) according to any one of claims 1 to 3, characterized in that the inner panel (120) includes on its outside reinforcement for mounting the opening cable of said opening member (100).

5. An opening member according to any one of claims 1 to 4, characterized in that the inner panel (120) has vertical lateral slideways (133) for slidably mounting a window (131).

6. An opening member according to any one of claims 1 to 5, characterized in that the inner panel (120) is made by blow-molding.

7. An opening member according to claim 6, characterized in that the inner panel (120) includes a housing (125a) for a duct for distributing air to a demisting grille (125).

8. An opening member according to any one of claims 1 to 5, characterized in that the inner panel (120) is made in the form of a honeycomb structure.

9. An opening member according to any one of claims 1 to 5, characterized in that the inner panel (120) is made by injection molding a foam complex.

10. An opening member according to any one of claims 1 to 9, characterized in that it includes an outer frame (130) within which there are assembled both the outer panel (110) and the inner panel (120), the outer frame (130) forming a frame round a window (131).
